# EUROPÄISCHE PATENTSCHRIFT

(11) **EP 3 521 652 B1**
(45) Veröffentlichungstag und Bekanntmachung des Hinweises auf die Patenterteilung: **03.04.2024**
(21) Anmeldenummer: 19151188.0
(22) Anmeldetag: 10.01.2019
(51) Int. Cl.: F16F 7/14

(54) **DÄMPFUNGSSYSTEM**
DAMPING SYSTEM
SYSTÈME D'AMORTISSEMENT

(30) Priorität: 31.01.2018 DE 102018201502
(43) Veröffentlichungstag der Anmeldung: 07.08.2019
(73) Patentinhaber: Sebert Schwingungstechnik GmbH, 73230 Kirchheim/Teck (DE)
(72) Erfinder: Sebert, Karl, 73230 Kirchheim unter Teck (DE)
(74) Vertreter: Patentanwälte Ruff, Wilhelm, Beier, Dauster & Partner mbB

(56) Entgegenhaltungen:
- EP-A1- 1 099 876
- WO-A1-88/08933
- DE-A1- 3 737 934
- US-A1- 2014 061 422

## Beschreibung

Die Erfindung betrifft ein Dämpfungssystem umfassend mindestens drei Dämpfungs- und Federanordnung mit zwei Endstücken, die als langgestreckte Leistenelemente mit einer Längsachse ausgebildet sind, und mit einer Draht- oder Seilanordnung umfassend mindestens ein wendelartig angeordnetes Draht- oder Seilstück, wobei die Endstücke mittels der Draht- oder Seilanordnung miteinander verbunden sind.

Derartige Dämpfungs- und Federanordnung sind beispielsweise aus EP 2339202 A1, DE 3737934 A1, US 2014/0061422 A1 oder WO 88/08933 A1 bekannt. Die Dämpfungs- und Federanordnung werden beispielsweise zwischen einer zu dämpfenden Vorrichtung und einem Untergrund oder zwischen zwei Vorrichtungen angeordnet.

Aus US 2014/0061422 A1 ist dabei ein Dämpfungssystem bekannt, welches zwei oder mehr zwischen zwei Grundplatten angeordnete Dämpfungs- und Federanordnungen umfasst, wobei die Dämpfungs- und Federanordnungen parallel zueinander an gegenüberliegenden Seiten der Grundplatten angeordnet sind. Das System umfasst zudem Bruchschwellenstifte, die unter Vorspannung zwischen den Grundplatten angeordnet sind.

### AUFGABE UND LÖSUNG

Es ist die Aufgabe der Erfindung ein verbessertes Dämpfungssystem umfassend mehrere Dämpfungs- und Federanordnungen zu schaffen.

Gemäß einem ersten Aspekt wird ein Dämpfungssystem geschaffen, umfassend mindestens drei Dämpfungs- und Federanordnungen, die jeweils zwei Endstücken, die als langgestreckte Leistenelemente mit einer Längsachse ausgebildet sind, und eine Draht- oder Seilanordnung mit mindestens einem wendelartig angeordnetes Draht- oder Seilstück, wobei die Endstücke mittels der Draht- oder Seilanordnung miteinander verbunden sind, umfassen, wobei die drei Dämpfungs- und Federanordnungen jeweils in Richtung ihrer Längsachse vorgespannt sind und wobei die mindestens drei Dämpfungs- und Federanordnungen so angeordnet sind, dass sich die Längsachsen oder Verlängerungen der Längsachsen in einem Schnittpunkt schneiden.

Die Dämpfungs- und Federanordnung ist durch den Fachmann für den jeweiligen Anwendungsfall geeignet dimensionierbar, wobei insbesondere eine Zahl der Wicklungen und/oder eine Länge der Dämpfungs- und Federanordnung geeignet wählbar ist. Die Endstücke sind vorzugsweise aus Metall, insbesondere aus Aluminium, aus einer Aluminiumlegierung oder aus Edelstahl. Es sind jedoch auch Endstücke aus Kunststoff denkbar. Das wenigstens eine Draht- oder Seilstück jeder Dämpfungs- und Federanordnung ist vorzugsweise als Drahtseilstück oder Stahldrahtlitze ausgebildet.

Durch die Vorspannung ist eine Ausrichtung einer zu dämpfenden Vorrichtung, beispielsweise eines Geräts, einer Anlage oder dergleichen, erzielbar. Die Wahl einer Höhe der Vorspannung ist je nach Anwendungsfall durch den Fachmann geeignet festlegbar.

In einer Ausgestaltung sind die Endstücke aus einer neutralen Position in Richtung der Längsachse zueinander versetzt angeordnet, sodass die Dämpfungs- und Federanordnung in Richtung der Längsachse vorgespannt ist. Durch den Versatz der Endstücke ist eine einfache Realisierung einer Vorspannung mit einem je nach Anwendungsfall definierten Wert möglich, wobei eine Höhe der Vorspannung durch Wahl eines Versatzes der Endstücke einstellbar ist.

Das System kann je nach Anwendungsfall weitere Dämpfungs- und Federanordnungen umfassen. Dabei sind in einer Ausgestaltungen zusätzlich nicht vorgespannten Dämpfungs- und Federanordnungen vorgesehen. In vorteilhaften Ausgestaltungen sind alle Dämpfungs- und Federanordnungen vorgespannt. Die Wahl einer Höhe der Vorspannung jeder Dämpfungs- und Federanordnung ist je nach Anwendungsfall durch den Fachmann geeignet festlegbar.

Sofern weitere vorgespannte Dämpfungs- und Federanordnungen vorgesehen sind, schneiden sich vorzugsweise alle Längsachse oder deren Verlängerungen in einem gemeinsamen Schnittpunkt. In einer Ausgestaltung sind für eine Vorspannung jeweils die Endstücke einer Dämpfungs- und Federanordnung aus einer neutralen Position in Richtung der Längsachse zueinander versetzt angeordnet. Durch den Versatz der Endstücke ist eine einfache Realisierung einer Vorspannung mit einem je nach Anwendungsfall definierten Wert möglich, wobei eine Höhe der Vorspannung durch Wahl eines Versatzes der Endstücke einstellbar ist. In einer Ausgestaltung sind dabei die einem Untergrund zugeordneten, im üblichen Gebrauch unten angeordneten Endstücke der Dämpfungs- und Federanordnungen relativ zu den im üblichen Gebrauch oben angeordneten Endstücken der Dämpfungs- und Federanordnungen in Richtung auf den Schnittpunkt zu versetzt. In vorteilhaften Ausgestaltungen sind die einer zu dämpfenden Vorrichtung zugeordneten, im üblichen Gebrauch oben angeordneten Endstücke der Dämpfungs- und Federanordnungen relativ zu den im üblichen Gebrauch unten angeordneten Endstücken der Dämpfungs- und Federanordnungen in Richtung auf den Schnittpunkt zu versetzt.

Der Schnittpunkt entspricht in vorteilhaften Ausgestaltungen zumindest in etwa in einem auf eine zugehörige Ebene projizierten Schwerpunkt und/oder einem Mittelpunkt einer zu dämpfenden Vorrichtung.

Die Endstücke sind beispielsweise an zwei Montageplatten montiert. Durch die Montageplatten ist eine Vormontage des Dämpfungssystems möglich. Eine im üblichen Gebrauch der zu dämpfenden Vorrichtung zugeordnete Montageplatte ist dabei mit der zu dämpfenden Vorrichtung in einer Ausgestaltung verbindbar. In anderen Ausgestaltungen wird die zu dämpfende Vorrichtung auf die ihr zugeordnete Montageplatte aufgesetzt. In wieder anderen Ausgestaltungen ist die Montageplatte Teil der zu dämpfenden Vorrichtung.

Für eine gleichmäßige Belastungsverteilung sind in vorteilhaften Ausgestaltungen die mindestens drei Dämpfungs- und Federanordnungen regelmäßig verteilt um den Schnittpunkt angeordnet.

Durch die Vorspannung und die Ausrichtung ist die zu dämpfende Vorrichtung in einem Normalzustand, d.h. beispielsweise ohne zusätzlich einwirkende äußere Kräfte, sicher fixiert und stabil ausgerichtet. Bei einer bestimmungsgemäßem Belastung in einer Richtung senkrecht zu den Endstücken, d.h. bei einer üblichen Ausrichtung des Dämpfungssystems in vertikaler Richtung, reagiert das Dämpfungssystem sofort und geht in einen weichen Anteil der Dämpfungs- und Federanordnungen über. Durch die Ausrichtung und Vorspannung bleibt die zu dämpfende Vorrichtung bei der Belastung zentriert, d. h. sie bewegt sich nicht oder nur unwesentlich in eine Ebene parallel zu den Endstücken. Bei einer üblichen Anordnung der Endstücke wird somit eine translatorische Bewegung in horizontaler Richtung und/oder eine Rotation um eine vertikale Achse verhindert oder zumindest auf ein tolerierbares Maß reduziert. Dies minimiert Restbeschleunigungen. Nach einem Wegfall der Belastung wird die Vorrichtung durch Ausrichtung der Dämpfungs- und Federanordnungen und deren Vorspannung vollständig oder zumindest im Rahmen einer Toleranz in die Ausgangslage zurückbewegt. Da keine Bewegungen oder nur minimale Bewegungen in Richtungen, die nicht mit der Hauptbelastungsrichtung zusammenfallen, entstehen, d.h. beispielsweise keine oder nur minimale Horizontalbewegungen oder Drehbewegungen bei einer üblichen Ausrichtung, gelangt die Vorrichtung sehr schnell wieder in einen Ruhezustand.

### KURZBESCHREIBUNG DER ZEICHNUNGEN

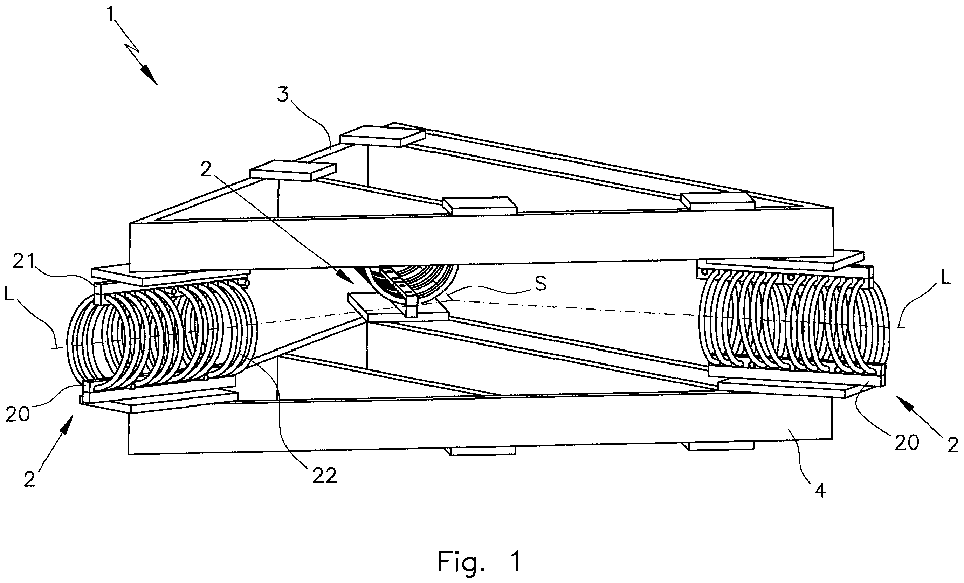

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figur erläutert ist. Dabei zeigt
- Fig. 1: schematisch ein Dämpfungssystem umfassend drei Dämpfungs- und Federanordnungen.

### DETAILLIERTE BESCHREIBUNG DER AUSFÜHRUNGSBEISPIELE

Figur 1 zeigt ein Dämpfungssystem 1 umfassend drei Dämpfungs- und Federanordnungen 2 und zwei in vertikaler Richtung voneinander beanstandete Montageplatten 3, 4. Eine in der Figur oben angeordnete Montageplatte 3 ist Teil einer nicht dargestellten zu dämpfenden Vorrichtung oder mit dieser verbunden oder dient als Auflagefläche für eine zu dämpfende Vorrichtung. Eine unten angeordnete Montageplatte 4 ist beispielsweise auf einen Untergrund aufsetzbar oder mit diesem verbindbar. Es versteht sich, dass daneben auch andere Anwendungen denkbar sind.

Die Dämpfungs- und Federanordnungen 2 weisen jeweils zwei in vertikaler Richtung beabstandete Endstücke 20, 21 auf, die als langgestreckte Leistenelemente mit einer Längsachse L ausgebildet sind. Aufgrund ihrer Anordnung werden die Endstücke 20, 21 auch als unteres Endstück 20 und oberes Endstück 21 bezeichnet. In dem dargestellten Ausführungsbeispiel ist das obere Endstück 21 mit der oberen Montageplatte 3 und das untere Endstück 21 mit der unteren Montageplatte 4 verbunden.

Die Endstücke 20, 21 sind in dem dargestellten Ausführungsbeispiel jeweils zweiteilig. Eine derartige Gestaltung ist vorteilhaft für eine Fertigung. Es sind jedoch auch einteilige oder andere Gestaltungen denkbar.

Die Dämpfungs- und Federanordnungen 2 weisen weiter jeweils eine Draht- oder Seilanordnung 22 mit mindestens einem wendelartig angeordneten Draht- oder Seilstück auf. Die Endstücke 20, 21 sind mittels der Draht- oder Seilanordnung 22 miteinander verbunden, wobei das Draht- oder Seilstück abwechselnd durch an dem oberen und dem unteren Endstück 20, 21 vorgesehene Ausnehmungen geführt ist. Die Endstücke 20, 21 sind unter Verformung der Draht- oder Seilanordnung 22 in vertikaler Richtung relativ zueinander bewegbar.

Die drei dargestellten Dämpfungs- und Federanordnungen 2 sind regelmäßig verteilt so angeordnet, dass sich die Verlängerungen der Längsachsen L, auch als verlängerte Längsachsen bezeichnet, in einem gemeinsamen Schnittpunkt S schneiden.

Die drei Dämpfungs- und Federanordnungen 2 sind jeweils in Richtung der Längsachse L vorgespannt. Zu diesem Zweck ist in dem dargestellten Ausführungsbeispiel jeweils das obere Endstück 21 in Richtung des Schnittpunkts S aus einer neutralen Position relativ zu dem unteren Endstück 20 versetzt angeordnet.

Eine nicht dargestellte zu dämpfende Vorrichtung wird auf die obere Montageplatte 3 derart aufgesetzt oder derart mit dieser verbunden, dass ein auf eine zugehörige Ebene projizierter Schwerpunkt und/oder ein Mittelpunkt der zu dämpfenden Vorrichtung. zumindest in etwa dem Schnittpunkt S entspricht.

Durch die Vorspannung und die Ausrichtung der Dämpfungs- und Federanordnungen 2 ist die zu dämpfende Vorrichtung ohne äußere Belastungen mittels des Dämpfungssystem 1 gut fixiert und stabil abgestützt.

Bei bestimmungsgemäßer Belastung des dargestellten Dämpfungssystems 1 in vertikaler Richtung reagiert das Dämpfungssystem 1 sofort und geht in einen weichen Anteil der Dämpfungs- und Federanordnungen 2 über.

Durch die Ausrichtung und Vorspannung der Dämpfungs- und Federanordnungen 2 bleibt die zu dämpfende Vorrichtung bei einer Belastung in vertikaler Richtung zentriert, d. h., die Vorrichtung bewegt sich nicht oder nur in einem tolerierbaren Maß horizontal oder rotativ, beispielsweise um eine vertikale Achse.

Nach der Belastung wird die Vorrichtung aufgrund der Ausrichtung der Dämpfungs- und Federanordnungen 2 und deren Vorspannung in die Ausgangslage zurückbewegt. Da bei einer Belastung und einem Wegfall der Belastung keine oder nur sehr geringe Horizontalbewegungen oder Drehbewegungen entstehen, kommt die zu dämpfende Vorrichtung dabei sehr schnell wieder in einen Ruhezustand.

Es ist für den Fachmann offensichtlich, dass die Darstellung lediglich beispielhaft ist und zahlreiche Abwandlungen denkbar sind. Beispielsweise durch Hinzufügen weiterer Dämpfungs- und Federanordnungen 2.

Die dargestellte Ausrichtung des Dämpfungssystems 1 ist ebenfalls lediglich beispielhaft und die Begriffe "oben", "unten", etc. sind lediglich in Bezug auf die Darstellung in der Figur zu verstehen und nicht einschränkend.

## Patentansprüche

1. Dämpfungssystem umfassend mindestens drei Dämpfungs- und Federanordnungen (2), die jeweils zwei Endstücke (20, 21), die als langgestreckte Leistenelemente mit einer Längsachse (L) ausgebildet sind, und eine Draht- oder Seilanordnung (22) mit mindestens einem wendelartig angeordnetes Draht- oder Seilstück (15, 16), wobei die Endstücke (20, 21) mittels der Draht- oder Seilanordnung (22) miteinander verbunden sind, umfassen, **dadurch gekennzeichnet, dass** die Dämpfungs- und Federanordnungen (2) jeweils in Richtung ihrer Längsachse (L) vorgespannt sind und die mindestens drei Dämpfungs- und Federanordnungen (2) so angeordnet sind, dass sich die Längsachsen (L) oder Verlängerungen der Längsachsen (L) in einem Schnittpunkt (S) schneiden.

2. Dämpfungssystem nach Anspruch 1, **dadurch gekennzeichnet, dass** die Endstücke (20, 21) aus einer neutralen Position in Richtung der Längsachse (L) zueinander versetzt angeordnet sind, sodass die Dämpfungs- und Federanordnung (2) in Richtung der Längsachse (L) vorgespannt ist.

3. Dämpfungssystem nach Anspruch 1 oder 2, **dadurch gekennzeichnet, dass** der Schnittpunkt (S) zumindest in etwa in einem auf eine zugehörige Ebene projizierten Schwerpunkt und/oder einem Mittelpunkt einer zu dämpfenden Vorrichtung entspricht.

4. Dämpfungssystem nach Anspruch 1, 2 oder 3, **dadurch gekennzeichnet, dass** die mindestens drei Dämpfungs- und Federanordnungen (2) regelmäßig verteilt um den Schnittpunkt (S) angeordnet sind.

5. Dämpfungssystem nach einem der vorhergehenden Ansprüche, **dadurch gekennzeichnet, dass** die Endstücke (20, 21) an zwei Montageplatten (3, 4) montiert sind.

## Claims

1. Damping system comprising at least three damping and spring arrangements (2) which each comprise two end pieces (20, 21), which are in the form of elongate strip elements with a longitudinal axis (L), and a wire or cable arrangement (22) having at least one spirally arranged wire or cable piece (15, 16), wherein the end pieces (20, 21) are connected to each other by means of the wire or cable arrangement (22), **characterized in that** the damping and spring arrangements (2) are each prestressed in the direction of their longitudinal axis (L), and the at least three damping and spring arrangements (2) are arranged in such a manner that the longitudinal axes (L) or extensions of the longitudinal axes (L) intersect at an intersecting point (S).

2. Damping system according to Claim 1, **characterized in that** the end pieces (20, 21) are arranged offset from one another from a neutral position in the direction of the longitudinal axis (L) such that the damping and spring arrangement (2) is prestressed in the direction of the longitudinal axis (L).

3. Damping system according to Claim 1 or 2, **characterized in that** the intersecting point (S) at least approximately corresponds to a centre of gravity projected onto an associated plane and/or to a centre point of a device to be damped.

4. Damping system according to Claim 1, 2 or 3, **characterized in that** the at least three damping and spring arrangements (2) are arranged distributed regularly around the intersecting point (S).

5. Damping system according to one of the preceding claims, **characterized in that** the end pieces (20, 21) are mounted on two mounting plates (3, 4).

## Revendications

1. Système d'amortissement comprenant au moins trois agencements (2) d'amortissement et de ressort, qui comprennent chacun deux pièces d'extrémité (20, 21), qui sont conçues sous forme d'éléments en baguette allongés avec un axe longitudinal (L), et un agencement de fil ou de câble (22) avec au moins une pièce de fil ou de câble (15, 16) agencée de manière hélicoïdale, les pièces d'extrémité (20, 21) étant reliées entre elles au moyen de l'agencement de fil ou de câble (22), **caractérisé en ce que** les agencements (2) d'amortissement et de ressort sont chacun précontraints dans la direction de leur axe longitudinal (L) et les au moins trois agencements (2) d'amortissement et de ressort sont agencés de telle sorte que les axes longitudinaux (L) ou les prolongements des axes longitudinaux (L) se coupent en un point d'intersection (S).

2. Système d'amortissement selon la revendication 1, **caractérisé en ce que** les pièces d'extrémité (20, 21) sont décalées les unes par rapport aux autres à partir d'une position neutre dans la direction de l'axe longitudinal (L), de sorte que l'ensemble d'amortissement et de ressort (2) soit précontraint dans la direction de l'axe longitudinal (L).

3. Système d'amortissement selon la revendication 1 ou la revendication 2, **caractérisé en ce que** le point d'intersection (S) correspond au moins approximativement à un centre de gravité projeté sur un plan associé et/ou à un point central d'un agencement à amortir.

4. Système d'amortissement selon la revendication 1, 2 ou 3, **caractérisé en ce que** les au moins trois agencements (2) d'amortissement et de ressort sont répartis régulièrement autour du point d'intersection (S).

5. Système d'amortissement selon l'une des revendications précédentes, **caractérisé en ce que** les pièces d'extrémité (20, 21) sont montées sur deux plaques de montage (3, 4).
